(19)

**Europäisches Patentamt**
**European Patent Office**
**Office européen des brevets**

(11) **EP 4 447 437 A1**

(12) **EUROPEAN PATENT APPLICATION**

(43) Date of publication:
**16.10.2024  Bulletin 2024/42**

(21) Application number: **23305571.4**

(22) Date of filing: **14.04.2023**

(51) International Patent Classification (IPC):
**H04N 19/117** $^{(2014.01)}$   **H04N 19/19** $^{(2014.01)}$
**H04N 19/176** $^{(2014.01)}$   **H04N 19/186** $^{(2014.01)}$
**H04N 19/82** $^{(2014.01)}$   **H04N 19/182** $^{(2014.01)}$

(52) Cooperative Patent Classification (CPC):
**H04N 19/117; H04N 19/176; H04N 19/182;**
**H04N 19/186; H04N 19/19; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **RADOSAVLJEVIC, Milos**
  **35000 RENNES (FR)**
• **LE LEANNEC, Fabrice**
  **35830 BETTON (FR)**
• **ANDRIVON, Pierre**
  **35340 LIFFRE (FR)**
• **BLESTEL, Médéric**
  **35170 BRUZ (FR)**

(74) Representative: **RVDB Rennes**
  **44 rue Lariboisière**
  **35235 Thorigné-Fouillard (FR)**

(54) **ENCODING VIDEO PICTURE DATA**

(57)    The present application relates to a method of encoding an original video picture comprising pre-Sample Adaptive Offset vertical filtering using a first combination of PSAO parameters and pre-Sample Adaptive Offset horizontal filtering using a second combination of PSAO parameters intended to be applied on video picture data, wherein the first and second combinations of PSAO parameters are selected jointly by minimizing a delta cost ($\Delta J_{i,j}$) defined as a linear combination of a delta distortion and a delta rate calculated for a couple of a first candidate combination of PSAO parameters and a second candidate combination of PSAO parameters, said delta distortion equals to a difference between a first distortion calculated by taking into account the pre-Sample Adaptive Offset vertical and horizontal filtering and a second distortion calculated without applying the pre-Sample Adaptive Offset vertical and horizontal filtering.

**Fig. 10**

**Description**

<u>FIELD</u>

The present application generally relates to video picture encoding and decoding. Particularly, but not exclusively, the technical field of the present application is related to in-loop filtering of video picture block.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH=**128). A default CTU size (height, width) is encoded into the bitstream, for example at a sequence level in the Sequence Parameter Set (SPS).

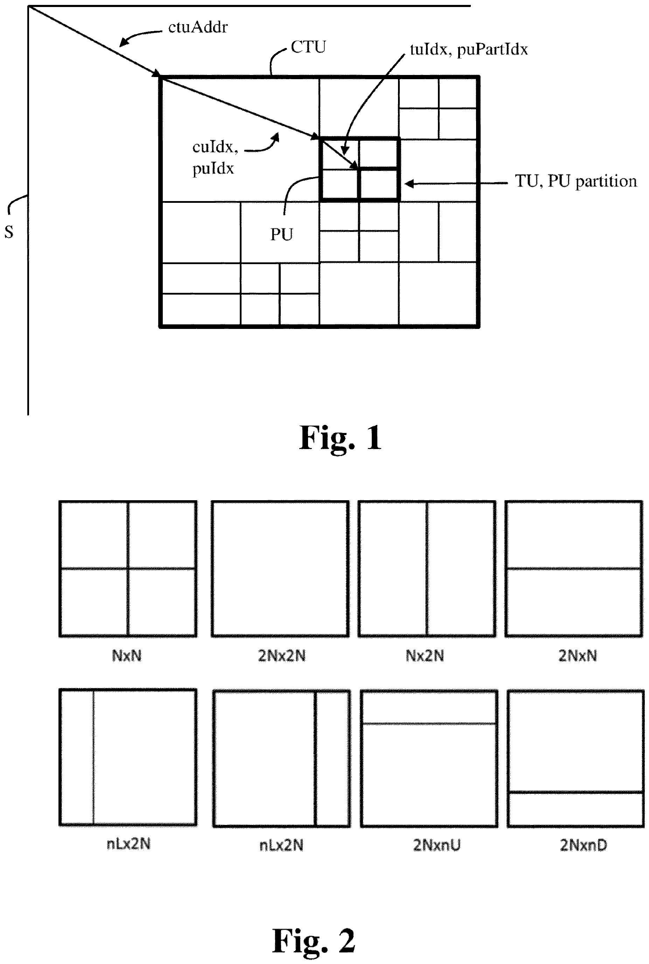

The spatial position of a CTU in a CTU grid is determined from a CTU address **ctuAddr** defining a spatial position of the top-left corner of a CTU from an origin. As illustrated on **Figure 1**, the CTU address may define the spatial position from the top-left corner of a higher-level spatial structure S containing the CTU.

A coding tree is associated with each CTU to determine a tree-division of the CTU.

As illustrated on **Figure 1**, in HEVC, the coding tree is a quad-tree division of a CTU, where each leaf is called a Coding Unit (CU). The spatial position of a CU in the video picture is defined by a CU index **cuIdx** indicating a spatial position from the top-left corner of the CTU. A CU is spatially partitioned into one or more Prediction Units (PU). The spatial position of a PU in the video picture VP is defined by a PU index **puIdx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2**. They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

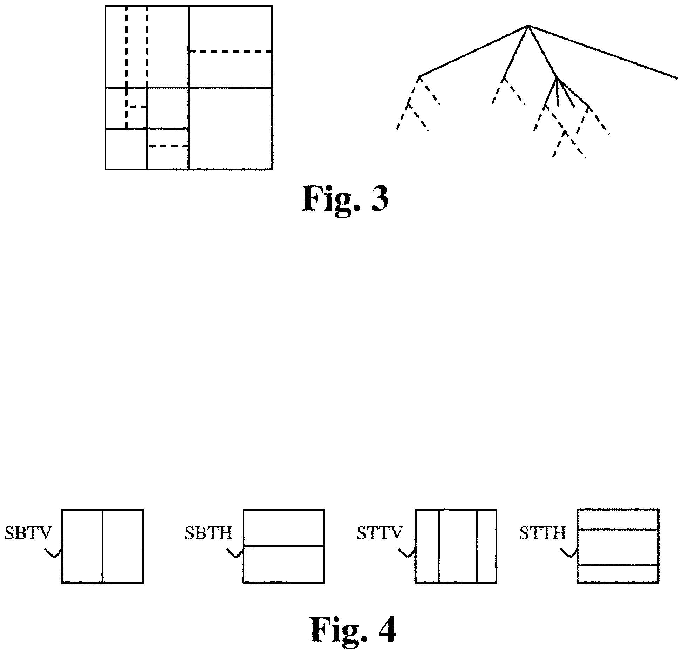

As illustrated on **Figure 3**, in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4**. These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

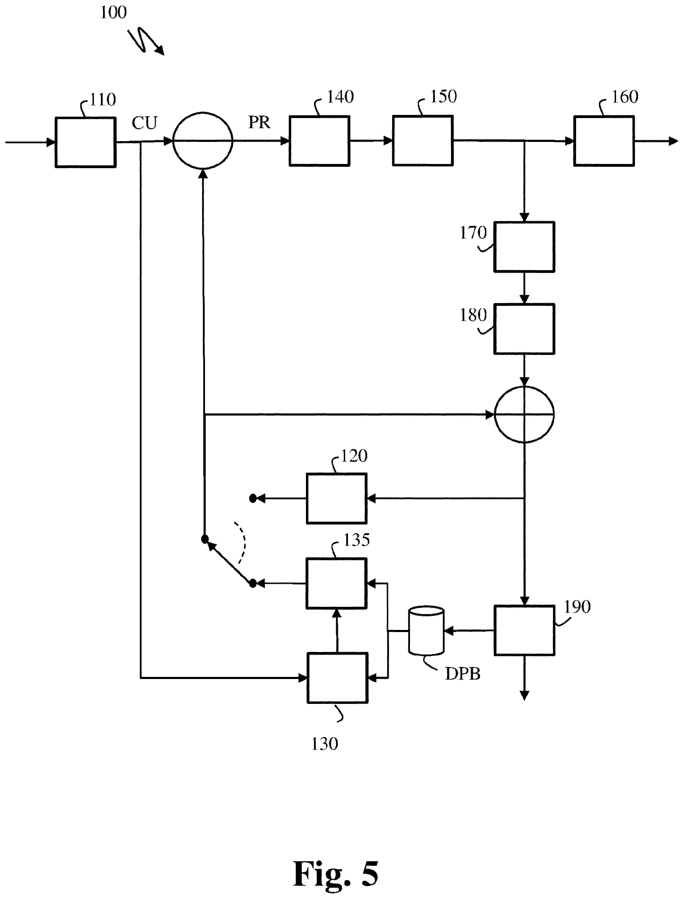

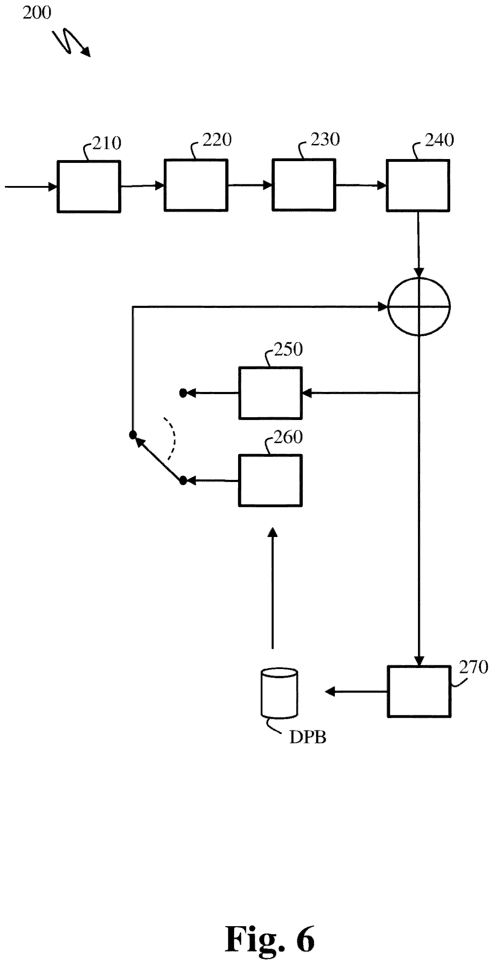

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\text{Argmin}}\{RD_{cost}(p)\} \quad (1)$$

where $P$ is the set of all candidate coding modes for the current block, $p$ represents a candidate coding mode in that set, $RD_{Cost}(p)$ is a rate-distortion cost of candidate coding mode $p$, typically expressed as:

$$RD_{cost(p)} = D(p) + \lambda \cdot R(p)$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks, or the filtered reconstructed blocks form a reference picture that may be stored into a decoded picture buffer (DPB) as above discussed (**Figure 5**).

In step 130/135 of **Figure 5** or step 260 of **Figure 6**, an inter-predicted block is defined from inter-prediction data associated with the current block (CU or a PU of a CU) of a video picture. This inter-prediction data comprises motion information that may be represented (coded) according to the so-called whole-block-based AMVP mode (Adaptive Motion Vector Prediction) or the so-called whole-block-based merge mode.

Recently, pre-Sample Adaptive Offset (Pre-SAO) filtering as defined in JVET-Q0434-v5 (in Wang-Q Lim, Christian Helmrich, Johannes Erfurt, Heiko Schwarz, Detlev Marpe, and Thomas Wiegand, "Pre-Sample Adaptive Offset Filter", Joint Video Experts Team (JVET) of ITU-T SG 16 WP 3 and ISO/IEC JTC 1/SC 29, 17th Meeting, Brussels, 7-17 January 2020, Document: JVET-Q0434-v5) was introduced as in-loop filtering.

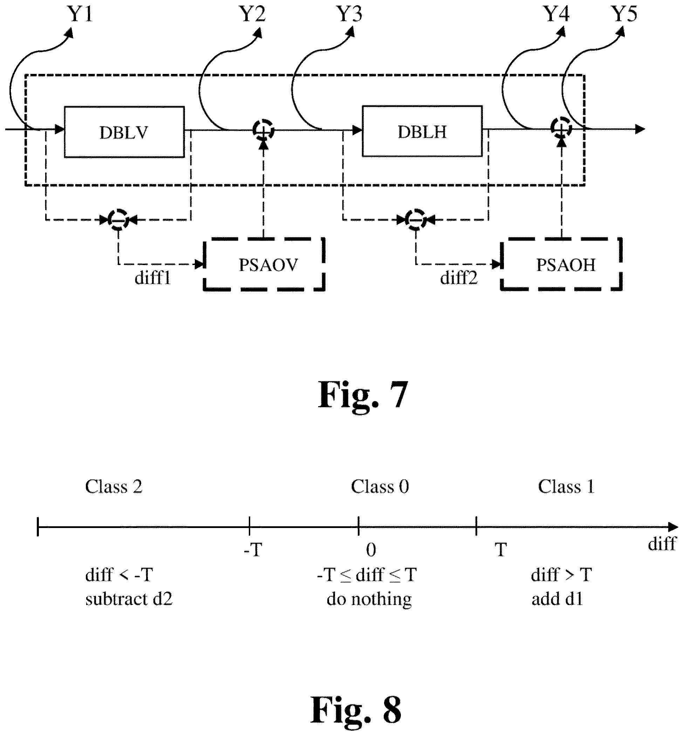

In essence, in JVET-Q0434-v5, pre-SAO (PSAO) filtering operates after deblocking filtering to further improve the coding efficiency of the in-loop filter. Pre-SAO filtering adds an offset to a pixel that is first classified into one of possible classes. For each class, there is one offset associated with it. As illustrated on **Figure 7**, pre-SAO filtering is applying two SAO-like filtering operations called Pre-SAO Vertical (PSAOV) filtering after deblocking vertical (DBLV) filtering and Pre-SAO Horizontal (PSAOH) filtering after deblocking horizontal (DBLH) filtering.

PSAOV filtering operates on pixel differences calculated between pixels $Y_1(p)$ of an input video picture $Y_1$ at the input of the DBLV filter and pixels $Y_2(p)$ of a second video picture $Y_2$ at the output of the DBLV filter.

Mathematically, pixel $Y_3(p)$ of a third video picture $Y_3$ at the output of the PSAOV filter is given by:

$$Y_3(p) = \text{Clip1}(Y_2(p) + d_1 \cdot (diff1(p) > T\,?\,1:0) - d_2 \cdot (diff1(p) < -T\,?\,1:0))$$

$$(2)$$

where $T$ is a threshold (predetermined positive constant value) and $d_1$ and $d_2$ are offset coefficients (predetermined positive constant values) associated with two classes based on the sample-wise difference *diff*1( ) between $Y_1(p)$ and $Y_2(p)$ given by

$$diff1(p) = Y_1(p) - Y_2(p)$$

The threshold $T$ and the offsets coefficients $d_1$ and $d_2$ are PSAO parameters used for PSAOV filtering.

The first class that applies offset $d_1$ is given by taking all pixel locations $p$ such that $diff1(p) > T$ while the second class that applies offset $d_2$ is given by $diff1(p) < -T$. The offset coefficients $d_1$ and $d_2$ for PSAOV are calculated at the encoder so that the mean square error between the third video picture $Y_3$ and a reference video picture $X$ (original video picture VP) is minimized. PSAOH filtering operates on pixel differences calculated between pixels $Y_3(p)$ of the third video picture $Y_3$ at the input of the DBLH filter and pixel $Y_4(p)$ of a fourth video picture $Y_4$ at the output of the DBLH filter.

Mathematically, pixel $Y_5(p)$ of a fifth video picture $Y_5$ at the output of the PSAOH filter is given by:

$$Y_5(p) = \text{Clip1}(Y_4(p) + d_1 \cdot (diff2(p) > T? \, 1 : 0) - d_2 \cdot (diff2(p) < -T? \, 1 : 0))$$

$$(3)$$

where $T$ is a threshold (predetermined positive constant value) and $d_1$ and $d_2$ are offset coefficients (predetermined positive constant values) associated with two classes based on the sample-wise difference *diff*2( )between $Y_3(p)$ and $Y_4(p)$ given by

$$diff2(p) = Y_3(p) - Y_4(p).$$

The threshold $T$ and the offset coefficients $d_1$ and $d_2$ are PSAO parameters used for PSAOH filtering.

The first class that applies offset $d_1$ is given by taking all pixel locations p such that $diff2(p) > T$ while the second class that applies offset $d_2$ is given by $diff2(p) < -T$. The offset coefficients $d_1$ and $d_2$ for PSAOV are calculated at the encoder so that the mean square error between the fifth video picture $Y_5$ and the reference video picture $X$ is minimized.

The two predetermined offset coefficients $d_1$ and $d_2$, and a predetermined threshold value $T$ and an activation (enabling) flag, for each of PSAOH and PSAOV filters are signaled separately to the decoder (separate PSAO parameters for PSAOH and PSAOV filters).

PSAOH and PSAOV are applied for luma component and the two chroma components independently (however two chroma components share the same Pre-SAO syntax, e.g. the same parameters are applied to both Cb and Cr component of a video picture).

**Figure 8** shows schematically the three classes as defined in JVET-Q0434-v5.

The pixels that are not affected by the deblocking filter will always have difference before and after deblocking filtering equals to 0, e.g. diff1 and diff2 for those pixels is always 0, and hence they always fall in the Class 0, which leads that they will never be affected by PSAO filtering (no offset is added to those pixels). In other words, as noted before, PSAOV and PSAOH filtering operate only on the pixels of video picture that are modified by the respective DBLV and DBLH deblocking filters.

For class 1, the offset d1 is added to a pixel and for class 2, the offset d2 is subtracted to a pixel.

At the encoder, PSAO parameters for PSAOV and PSAOH filtering are selected separately by using a RDO process using delta costs.

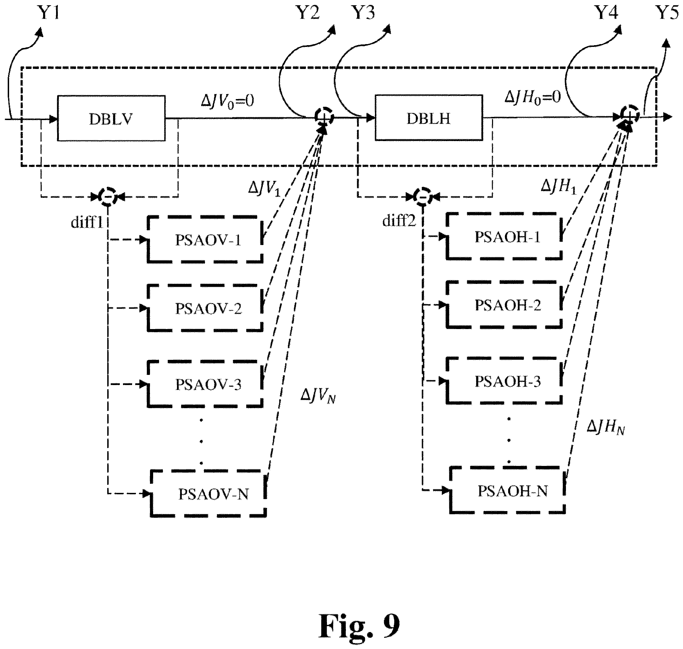

**Figure 9** illustrates a selection of PSAO parameters according to the prior art. Basically, PSAO parameters are selected from RDO process based on a delta cost $\Delta J$ defined as a linear combination of a delta distortion $\Delta D$ representative of a change of a distortion when PSAO filtering is applied or not and a delta rate $\Delta R$ representing bits required to encode syntax elements relative to PSAO filtering using the selected PSAO parameters:

$$\Delta J = \Delta D + \alpha \Delta R$$

where $\alpha$ is Lagrange multiplier.

In the current VVC reference implementation, deblocking parameters can be defined a-priori, e.g. in the configuration file, or they can be adaptively selected based on the RDO at the encoder.

RDO process selects a set of PSAO parameters that minimize $\Delta J$ which also includes the case when PSAO is not applied ($\Delta J = 0$).

Obviously, to improve compression performance by applying PSAO filtering, $\Delta J$ must be smaller than 0.

More precisely, in a first step, a first combination of PSAO parameters is selected as PSAO parameters for PSAOV filtering by minimizing a delta cost $\Delta JV_i$ defined as a linear combination of a delta distortion $\Delta D_i$ representative of a change of a distortion when PSAOV filtering, using a i-th candidate combination of PSAO parameters, is applied or not, and a delta rate $\Delta R_i$ representing bits required to encode syntax elements relative to PSAOV filtering using the i-th candidate combination of PSAO parameters.

In a second step, a second combination of PSAO parameters is selected as PSAO parameters for PSAOH filtering by minimizing a delta cost $\Delta JH_j$ defined as a linear combination of a delta distortion $\Delta D_j$ representative of a change of a distortion when PSAOH filtering, using a j-th candidate combination of PSAO parameters, is applied or not, and a delta rate $\Delta R_j$ representing bits required to encode syntax elements relative to PSAOH filtering using the j-th candidate combination of PSAO parameters.

The delta distortion $\Delta D_i$ is defined as a sum of a delta distortion $\Delta D_{1,i}$ and a delta distortion $\Delta D_{2,i}$, said delta distortion $\Delta D_{1,i}$ being defined as a difference between a distortion $D_{after1,i}$ and a distortion $D_{before}$ and said delta distortion $\Delta D_{2,i}$ being defined as a difference between a distortion $D_{after2,i}$ and the distortion $D_{before}$.

Mathematically,

$$\Delta D_{1,i} = D_{after1,i} - D_{before} = N_1 d_{1,i}^2 - 2d_{1,i} \sum (X - Y_2)$$

where $N_1$ is the number of pixels that satisfy *diff*1*(p)* > $T_i$ (in other words number of pixels p falling in class 1 during PSAO pixel classification (**Figure 8**) and where $\Delta D_{1,i}$ is only calculated for those pixels p falling in the class 1).

$$\Delta D_{2,i} = D_{after2,i} - D_{before} = N_2 d_{2,i}^2 + 2d_{2,i} \sum (X - Y_2)$$

Where $N_2$ is the number of pixels that satisfy *diff*1*(p)* < -$T_i$ (in other words number of pixels p falling in class 2 during PSAO pixel classification and where $\Delta D_{2,i}$ is only calculated for those pixels p falling in the class 2).

The distortion $D_{after1,i}$ is calculated between the reference video picture $X$ and an output video picture in which the pixels values are a sum of the pixel values of the second video picture $Y_2$ and an offset $d_{1,i}$ of the i-th combination of PSAO parameters comprising $d_{1,i}$:

$$D_{after1,i} = \sum (X - (Y_2 + d_{1,i}))^2$$

The distortion $D_{before}$ is calculated between the reference video picture $X$ and the second video picture $Y_2$:

$$D_{before} = \sum (X - Y_2)^2$$

The distortion $D_{after2,i}$ is calculated between the reference video picture X and an output video picture in which the pixels values are a difference between the pixel values of the second video picture $Y_2$ and an offset $d_{2,i}$ of the i-th combination of PSAO parameters :

$$D_{after2,i} = \sum (X - (Y_2 - d_{2,i}))^2$$

For calss-0 delta distortion is $\Delta D$=0 since no change in pixel values is observed and no offset is added.

The delta rate $\Delta R_i$ is representative of a change of a number of bits required to encode PSAO syntax associated with the i-th combination of PSAO parameters.

The delta distortion $\Delta D_j$ is defined as a sum of a delta distortion $\Delta D_{1,j}$ and a delta distortion $\Delta D_{2,j}$, said delta distortion $\Delta D_{1,j}$ being defined as a difference between a distortion $D_{after1,j}$ and the distortion $D_{before}$ and said delta distortion $\Delta D_{2,j}$ being defined as a difference between a distortion $D_{after2,j}$ and the distortion $D_{before}$.

Mathematically,

$$\Delta D_{1,j} = D_{after1,j} - D_{before} = N_1 d_{1,j}^2 - 2d_{1,j} \sum (X - Y_4)$$

where $N_1$ is the number of pixels that satisfy *diff*1*(p)* > $T_j$ (in other words number of pixels p falling in class 1 during PSAO pixel classification (**Figure 8**) and where $\Delta D_{1,j}$ is only calculated for those pixels p falling in the class 1).

$$\Delta D_{2,j} = D_{after2,j} - D_{before} = N_2 d_{2,j}^2 + 2 d_{2,j} \sum ( X - Y_4 )$$

where $N_2$ is the number of pixels p that satisfy $diff1(p) < -T_j$ (in other words number of pixels p falling in class 2 during PSAO pixel classification and where $\Delta D_{2,j}$ is only calculated for those pixels p falling in the class 2).

The distortion $D_{after1,j}$ is calculated between the reference video picture $X$ and an output video picture in which the pixels values are a sum of the pixel values of a fourth picture $Y_4$ at the output of the DBLH filter and an offset $d_{1,j}$ of the j-th combination of PSAO parameters comprising $d_{1,j}$:

$$D_{after1,j} = \sum ( X - ( Y_4 + d_{1,j}))^2$$

The distortion $D_{after2,j}$ is calculated between the reference video picture $X$ and an output video picture in which the pixels values are a difference between the pixel values of the fourth picture $Y_4$ and an offset $d_{2,j}$ of the j-th combination of PSAO parameters:

$$D_{after2,j} = \sum ( X - ( Y_4 - d_{2,j}))^2$$

The delta rate $\Delta R_j$ is representative of a change of a number of bits required to encode PSAO syntax associated with the j-th combination of PSAO parameters.

The delta rate $\Delta R$ relative to either the i-th or j-th combination of PSAO parameters is defined as a difference between a first rate $R_{before}$ representative of a number of bits required to encode syntax associated with the distortion $D_{before}$ and a rate $R_{after}$ representative of a number of bits required to encode syntax associated with the distortion $D_{after1,i}$ and $D_{after2,i}$ or $D_{after1,j}$ and $D_{after2,j}$:

$$\Delta R = R_{after} - R_{before}$$

One disadvantage of the selection of PSAO parameters according to **Figure 9** is that it may miss to select the best possible combinations of PSAO parameters since it optimizes locally PSAO parameters for PSAOV filters and then for PSAOH filter. Also, since it is a sequential process, it cannot be done in parallel. In other words, PSAO parameter selection for PSAOH filter cannot be finished until PSAO parameters for PSAOV filter are selected.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of encoding an original video picture comprising pre-Sample Adaptive Offset vertical filtering using a first combination of PSAO parameters and pre-Sample Adaptive Offset horizontal filtering using a second combination of PSAO parameters intended to be applied on video picture data,

wherein the first and second combinations of PSAO parameters are selected jointly by minimizing a delta cost defined as a linear combination of a delta distortion and a delta rate calculated for a couple of a first candidate combination of PSAO parameters and a second candidate combination of PSAO parameters,

said delta distortion equals to a difference between a first distortion and a second distortion,

the first distortion being defined as a cumulative difference between pixels of a reference video picture derived from the original video picture and pixels of an output video picture obtained after having applied a deblocking vertical filtering followed by the pre-Sample Adaptive Offset vertical filtering using the first candidate combination of PSAO parameters followed by a deblocking horizontal filtering followed by the pre-Sample Adaptive Offset horizontal filtering using the second candidate combination of PSAO parameters to an input video picture,

the second distortion being defined as a cumulative difference between pixels of the reference video picture and pixels of an output video picture obtained after having applied the vertical deblocking filtering and the horizontal deblocking filtering to the input video picture without applying the pre-Sample Adaptive Offset vertical and horizontal filtering,
and

the delta rate representing a number of bits required to encode syntax elements relative to pre-Sample Adaptive Offset vertical filtering using the first candidate combination of PSAO parameters and pre-Sample Adaptive Offset horizontal filtering using the second candidate combination of PSAO parameters.

In one exemplary embodiment, PSAO parameters comprising two offset coefficients, wherein the offset range of said two offset coefficients allows negative offset coefficients.

In one exemplary embodiment, deblocking parameters used by deblocking vertical or horizontal filtering are selected by minimizing a cost defined as a distortion between the reference video picture (X) and an output video picture of deblocking vertical or horizontal filters using candidate deblocking parameters.

In one exemplary embodiment, the deblocking parameters used by deblocking vertical or horizontal filtering are selected without considering pre-Sample Adaptive Offset vertical and horizontal filtering.

In one exemplary embodiment, the deblocking parameters used by deblocking vertical or horizontal filtering and the first and second combination of PSAO parameters are selected jointly.

In one exemplary embodiment, the input video picture comprising a luma and two chroma components, a first joint selection of deblocking parameters used by deblocking vertical or horizontal filtering and the first and second combination of PSAO parameters is used for the luma component of to the input video picture, and a second joint selection of deblocking parameters used by deblocking vertical or horizontal filtering and the first and second combination of PSAO parameters is used for chroma components of to an input video picture.

In one exemplary embodiment, deblocking parameters used by deblocking vertical filtering and deblocking parameters used by deblocking horizontal filtering are the same.

In one exemplary embodiment, the reference video picture is the original video picture.

In one exemplary embodiment, the reference video picture is obtained by motion compensated temporal filtering.

According to a second aspect of the present application, there is provided an apparatus comprising means for performing one of the methods according to the first aspect of the present application.

According to a third aspect of the present application, there is provided a computer program product including instructions which, when the program is executed by one or more processors, causes the one or more processors to carry out a method according to the first and/or second aspect of the present application.

According to a fourth aspect of the present application, there is provided a non-transitory storage medium carrying instructions of program code for executing a method according to the first and/or second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** shows schematically pre-SAO filtering combined with deblocking filtering in accordance with prior art;

**Figure 8** shows schematically the three classes as defined in JVET-Q0434-v5;

**Figure 9** illustrates a selection of PSAO parameters in accordance with prior art;

**Figure 10** shows schematically a selection of PSAO parameters in accordance with an exemplary embodiment of the present invention;

**Figure 11** shows schematically a joint selection of deblocking and PSAO parameters in accordance with an exemplary embodiment of the present invention;

**Figure 12** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en), VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

The at least one exemplary embodiment is not limited to a particular picture/video format.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

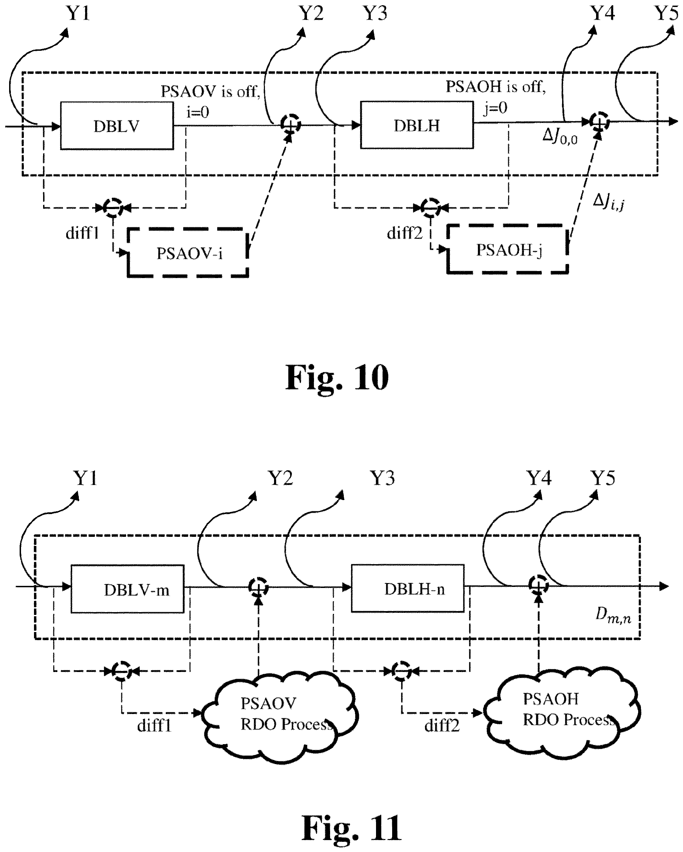

**Figure 10** shows schematically a selection of PSAO parameters according to an exemplary embodiment of the present invention.

According to the present invention, a first combination of PSAO parameters for PSAOV filter and a second combination of PSAO parameters for PSAOH filter are selected jointly by minimizing a delta cost $\Delta J_{i,j}$ defined as a linear combination of a delta distortion $\Delta D_{i,j}$ and a delta rate $\Delta R_{i,j}$ calculated for a couple of a i-th candidate combination of PSAO parameters and a j-th candidate combination of PSAO parameters.

The delta rate $\Delta R_{i,j}$ represents a number of bits required to encode syntax elements relative to PSAOV filtering using the i-th candidate combination of PSAO parameters and PSAOH filtering using the j-th candidate combination of PSAO parameters.

Joint selection of the first and second combinations PSAO parameters overcomes the disadvantage of selecting combinations PSAO parameters separately for PSAOV and PSAOH filters and leads to more precise PSAO parameter adaptation.

The distortion $\Delta D_{i,j}$ is given by:

$$\Delta D_{i,j} = D_{i,j} - D_{0,0}$$

where $D_{i,j} = \Sigma(X - Y_5)^2$ is a cumulative difference between pixels of a reference video picture X and pixels of an output picture $Y_5$.

The output picture $Y_5$ is obtained after having applied a DBLV filtering followed by the PSAOV filtering using the first candidate (i) combination of PSAO parameters followed by a DBLH filtering followed by the PSAOH filtering using the second candidate (j) combination of PSAO parameters to an input video picture $Y_1$.

The input video picture $Y_1$ is a video picture on which in-loop deblocking and PSAO filtering is to be applied.

The distortion $D_{0,0}$ corresponds to a cumulative difference between pixels of the reference picture $X$ and pixels of an output video picture obtained after having applied a vertical deblocking filtering and a horizontal deblocking filtering to the input video picture $Y_1$. Neither PSAOV nor PSAOH filters are applied.

Indexes $i$ and $j$ can take values from 0 to $N$, where $N$ is the total number of combinations of PSAO parameters can take.

Clearly $\Delta D_{i,j} < 0$ indicates improved distortion by applying PSAO filtering.

In one exemplary embodiment of the present application, PSAO parameters comprising two offset coefficients $d_1$ and $d_2$., the offset range allows negative values of PSAO parameters $d_1$ and $d_2$.

In one variant of said exemplary embodiment, the offset range of offset coefficients of PSAO parameters is symmetrical, i.e. $d_1, d_2 \in \{-Dmax, ..., Dmax\}$.

In one variant of said exemplary embodiment, the offset range is not symmetrical, i.e. $d_1, d_2 \in \{-D1max, ... , D2max\}$ wherein $-D1max$ represents the lowest value and $D2max$ represents the highest allowed/supported value, and $D1\ max \neq D2max$.

In one variant, distortions of the RDO process of **Figure 9** are calculated as follows to facilitate delta distortion calculation when negative offset coefficients are allowed :

$$D_{after2,i} = \sum(X - (Y_2 + d_{2,i}))^2$$

$$\Delta D_{2,i} = N_2 d_{2,i}^2 - 2d_{2,i}\sum(X - Y_2)$$

$$D_{after2,j} = \sum(X - (Y_4 + d_{2,j}))^2$$

$$\Delta D_{2,j} = N_2 d_{2,j}^2 - 2d_{2,j} \sum (X - Y_4)$$

In one exemplary embodiment, deblocking parameters used by DBLV or DBLH filtering are selected from a simplified RDO process that minimizes a cost $J_{m,n}$ defined as a distortion $D_{m,n}$. In the simplified RDO process rate is considered to be 0. In such a process only distortion is minimized effectively. The distortion $D_{m,n}$ is defined between the reference video picture X and an output video picture of DBLV and DBLH deblocking filter using candidate deblocking parameters $DBLV_m$ for DBLV filtering and $DBLH_n$ for DBLH filtering.

In one variant, the deblocking parameters used for DBLV and DBLH filtering are selected, without considering PSAOV and PSAOH filtering.

PSAO filtering is not applied during deblocking parameter selection but it can be applied (and optimized) later once deblocking parameters are selected.

In one variant, the deblocking parameters and the first and second combinations of PSAO parameters are selected jointly by a RDO process.

According to this last variant, RDO process iterates trough all possible combinations of DBL and PSAO parameters and selects those parameters that minimize an overall cost.

Implementation of joint optimization of DBL and PSAO parameters is given in the non-limiting example embodiment of **Figure 11**.

In the optimization process of **Figure 11**, all possible combinations of deblocking parameters *m,n,* here denoted with DBLV-m for DBLV filter and DBLH-n for DBLH filter are considered.

For each couple of combinations of deblocking parameters DBLV-m and DBLH-n, a i-th and a j-th combination of PSAO parameters are selected by using either separate selection as defined in prior art (**Figure 9**) or by using a joint selection according to an exemplary embodiment of the present application (**Figure 10**).

For a joint selection according to an exemplary embodiment of the present application (**Figure 10**), once optimal i-th and j-th combinations of PSAO parameters are selected for a couple of combinations of deblocking parameters DBLV-m and DBLH-n, the cost $J_{m,n}$ is calculated based on the distortion $D_{m,n}$ as explained previously.

Optimal couple of combinations of deblocking parameters DBLV-m and DBLH-n corresponds to the minimal cost $J_{m,n}$ (or equivalently minimal distortion $D_{m,n}$ since only distortion is optimized effectively), and which comprise optimal couple of i-th and a j-th combinations of PSAO parameters correspond to a minimal delta cost, e.g. $\Delta JV_i$ and $\Delta JH_j$ if separate PSAO optimization is used or $\Delta J_{i,j}$ if joint PSAO optimization is used.

In one variant, for each iteration, RDO process needs to take place since PSAO parameters change depending on which deblocking parameters are in use. Then the optimal deblocking parameters are selected in a way that only distortion $D_{m,n}$ is minimized, e.g. select *m* and *n* such that distortion $D_{m,n}$ is minimized $(m, n)|\min \{D_{m,n}\}$.

By selecting optimal couple of combinations of deblocking parameters DBLV-m and DBLH-n, implicitly optimal PSAO parameters are selected since for each set of deblocking parameters optimal PSAO parameters are obtained in the RDO process.

In one variant, the input video picture $Y_1$ comprising a luma and two chroma components, a first joint selection of deblocking and PSAO parameters is used for the luma component of the input video picture $Y_1$ and a second joint selection of deblocking and PSAO parameters is used for chroma components of the input video picture $Y_1$.

In one variant, the combination of deblocking parameters DBLV-m and the combination of deblocking parameters DBLH-n are the same.

In one variant, the reference video picture X is the video picture VP to be encoded.

In one variant, the reference picture X is obtained by motion compensated temporal filtering (MCTF) filtering as defined in (W. Per, H. Christopher, and J. Strom, "Gop-based temporal filter" improvements," Joint Video Experts Team (JVET) of ITU-T SG 16 WP 3 and ISO/IEC JTC 1/SC 29, document JVET-V0056, teleconference, April 2021).

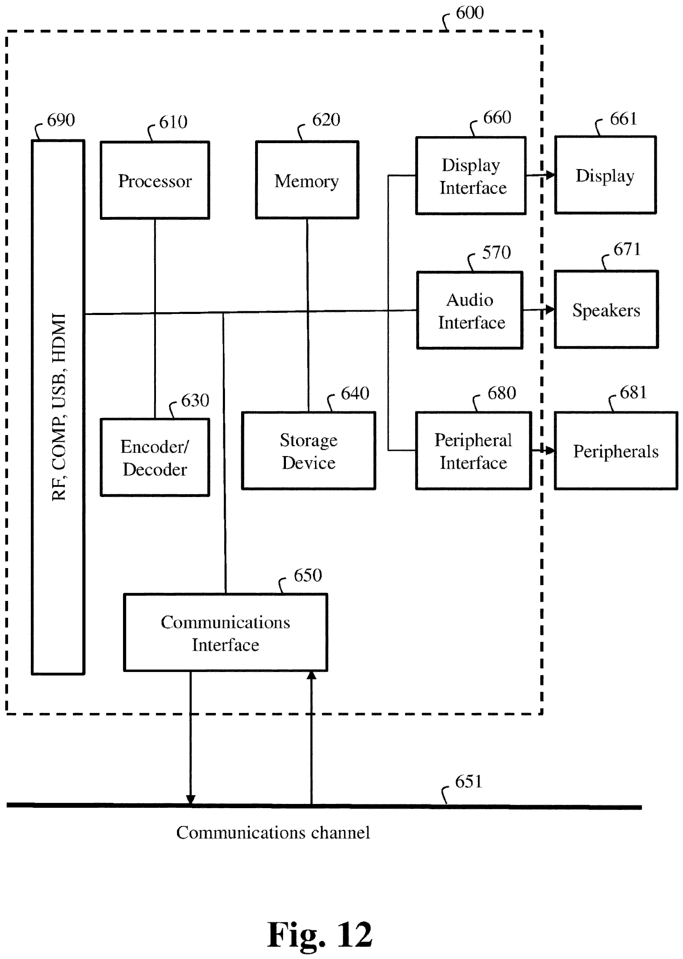

**Figure 12** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components.

For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-12,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding an original video picture comprising pre-Sample Adaptive Offset vertical filtering using a first combination of PSAO parameters and pre-Sample Adaptive Offset horizontal filtering using a second combination of PSAO parameters intended to be applied on video picture data, wherein the first and second combinations of PSAO parameters are selected jointly by minimizing a delta cost ($\Delta J_{i,j}$) defined as a linear combination of a delta distortion($\Delta D_{i,j}$) and a delta rate ($\Delta R_{i,j}$) calculated for a couple of a first candidate combination of PSAO parameters and a second candidate combination of PSAO parameters,

   said delta distortion ($\Delta D_{i,j}$) equals to a difference between a first distortion ($D_{i,j}$) and a second distortion ($D_{0,0}$), the first distortion ($D_{i,j}$) being defined as a cumulative difference between pixels of a reference video picture (X) derived from the original video picture and pixels of an output video picture ($Y_5$) obtained after having applied a deblocking vertical filtering followed by the pre-Sample Adaptive Offset vertical filtering using the first candidate (i) combination of PSAO parameters followed by a deblocking horizontal filtering followed by the pre-Sample Adaptive Offset horizontal filtering using the second candidate (j) combination of PSAO parameters to an input video picture ($Y_1$),
   the second distortion ($D_{0,0}$) being defined as a cumulative difference between pixels of the reference video picture (X) and pixels of an output video picture obtained after having applied the vertical deblocking filtering and the horizontal deblocking filtering to the input video picture ($Y_1$) without applying the pre-Sample Adaptive Offset vertical and horizontal filtering,

and

the delta rate ($\Delta R_{i,j}$) representing a number of bits required to encode syntax elements relative to pre-Sample Adaptive Offset vertical filtering using the first candidate combination of PSAO parameters and pre-Sample Adaptive Offset horizontal filtering using the second candidate combination of PSAO parameters.

2. The method of claim 1, wherein PSAO parameters comprising two offset coefficients, wherein the offset range of said two offset coefficients allows negative offset coefficients.

3. The method of one of claims 1 to 2 wherein deblocking parameters used by deblocking vertical or horizontal filtering are selected by minimizing a cost defined as a distortion between the reference video picture (X) and an output video picture of deblocking vertical or horizontal filters using candidate deblocking parameters.

4. The method of claim 3, wherein the deblocking parameters used by deblocking vertical or horizontal filtering are selected without considering pre-Sample Adaptive Offset vertical and horizontal filtering.

5. The method of claim 3, wherein the deblocking parameters used by deblocking vertical or horizontal filtering and the first and second combination of PSAO parameters are selected jointly.

6. The method of claim 5, wherein the input video picture ($Y_1$) comprising a luma and two chroma components, a first joint selection of deblocking parameters used by deblocking vertical or horizontal filtering and the first and second combination of PSAO parameters is used for the luma component of to the input video picture ($Y_1$), and a second joint selection of deblocking parameters used by deblocking vertical or horizontal filtering and the first and second combination of PSAO parameters is used for chroma components of to an input video picture ($Y_1$).

7. The method of one claims 3 to 6, wherein deblocking parameters used by deblocking vertical filtering and deblocking parameters used by deblocking horizontal filtering are the same.

8. The method of one of claims 1 to 7, wherein the reference video picture (X) is the original video picture.

9. The method of one of claims 1 to 8, wherein the reference video picture (X) is obtained by motion compensated temporal filtering.

10. An apparatus comprising means for performing one of the methods claimed in any one of claims 1 to 9.

11. A computer program product including instructions which, when the program is executed by one or more processors, causes the one or more processors to carry out a method claimed in any one of claims 1 to 9.

12. A non-transitory storage medium carrying instructions of program code for executing a method claimed in any one of claims 1 to 9.

**Fig. 1**

| NxN | 2Nx2N | Nx2N | 2NxN |
| nLx2N | nLx2N | 2NxnU | 2NxnD |

**Fig. 2**

**Fig. 3**

SBTV  SBTH  STTV  STTH

**Fig. 4**

100

110　CU　PR　140　150　160

170

180

120

135

190

DPB

130

# Fig. 5

Fig. 6

Y1  Y2  Y3  Y4  Y5

DBLV

diff1  PSAOV

DBLH

diff2  PSAOH

**Fig. 7**

| Class 2 | Class 0 | Class 1 |
|---------|---------|---------|

-T        0        T        diff

diff < -T        -T ≤ diff ≤ T        diff > T
subtract d2        do nothing        add d1

**Fig. 8**

**Fig. 9**

**Fig. 10**

**Fig. 11**

**Fig. 12**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LIM (FRAUNHOFER) W ET AL: "Pre-Sample Adaptive Offset Filter", 17. JVET MEETING; 20200107 – 20200117; BRUSSELS; (THE JOINT VIDEO EXPLORATION TEAM OF ISO/IEC JTC1/SC29/WG11 AND ITU-T SG.16) , no. JVET-Q0434 ; m52030 10 January 2020 (2020-01-10), XP030223508, Retrieved from the Internet: URL:http://phenix.int-evry.fr/jvet/doc_end _user/documents/17_Brussels/wg11/JVET-Q043 4-v5.zip JVET-Q0434-v5.docx [retrieved on 2020-01-10] | 1-8, 10-12 | INV. H04N19/117 H04N19/19 H04N19/176 H04N19/186 H04N19/82 H04N19/182 |
| Y | * the whole document * | 9 | |
| A | ANDERSSON (ERICSSON) K: "Crosscheck of JVET-Q0434 (Pre-Sample Adaptive Offset Filter)", 17. JVET MEETING; 20200107 – 20200117; BRUSSELS; (THE JOINT VIDEO EXPLORATION TEAM OF ISO/IEC JTC1/SC29/WG11 AND ITU-T SG.16 ) , no. JVET-Q0682 ; m52639 11 January 2020 (2020-01-11), XP030224044, Retrieved from the Internet: URL:http://phenix.int-evry.fr/jvet/doc_end _user/documents/17_Brussels/wg11/JVET-Q068 2-v2.zip JVET-Q0682.docx [retrieved on 2020-01-11] * section 1 * | 1-12 | **TECHNICAL FIELDS SEARCHED** (IPC) H04N |
| X | US 2022/116618 A1 (LIM WANG-Q [DE] ET AL) 14 April 2022 (2022-04-14) * paragraph [0208] – paragraph [0227] * * figure 11 * | 1-8, 10-12 | |

-/--

The present search report has been drawn up for all claims

| Place of search | Date of completion of the search | Examiner |
|---|---|---|
| Berlin | 15 October 2023 | Kontopodis, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                           

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

**EP 23 30 5571**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WENNERSTEN (ERICSSON) P ET AL: "[AHG10] GOP-based temporal filter improvements", 21. JVET MEETING; 20210106 – 20210115; TELECONFERENCE; (THE JOINT VIDEO EXPLORATION TEAM OF ISO/IEC JTC1/SC29/WG11 AND ITU-T SG.16 ), , no. JVET-U0056 30 December 2020 (2020-12-30), XP030293107, Retrieved from the Internet: URL:https://jvet-experts.org/doc_end_user/documents/21_Teleconference/wg11/JVET-U0056-v2.zip JVET-U0056_v2-clean.docx [retrieved on 2020-12-30] * the whole document * ----- | 9 | |
| A | LUO FALEI ET AL: "GPU based sample adaptive offset parameter decision and perceptual optimization for HEVC", 2016 IEEE INTERNATIONAL SYMPOSIUM ON CIRCUITS AND SYSTEMS (ISCAS), IEEE, 22 May 2016 (2016-05-22), pages 2687–2690, XP032942153, DOI: 10.1109/ISCAS.2016.7539147 [retrieved on 2016-08-09] * section II * ----- | 1 | TECHNICAL FIELDS SEARCHED (IPC) |

The present search report has been drawn up for all claims

| Place of search | Date of completion of the search | Examiner |
|---|---|---|
| Berlin | 15 October 2023 | Kontopodis, D |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 30 5571

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2023

| Patent document cited in search report | | Publication date | Patent family member(s) | | Publication date |
|---|---|---|---|---|---|
| US 2022116618 | A1 | 14-04-2022 | CN | 114391254 A | 22-04-2022 |
| | | | EP | 3991410 A1 | 04-05-2022 |
| | | | US | 2022116618 A1 | 14-04-2022 |
| | | | WO | 2020260668 A1 | 30-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG-Q LIM ; CHRISTIAN HELMRICH ; JOHANNES ERFURT ; HEIKO SCHWARZ ; DETLEV MARPE ; THOMAS WIEGAND.** Pre-Sample Adaptive Offset Filter. *Joint Video Experts Team (JVET) of ITU-T SG 16 WP 3 and ISO/IEC JTC 1/SC 29, 17th Meeting, Brussels,* 07 January 2020

- **W. PER ; H. CHRISTOPHER ; J. STROM.** based temporal filter'' improvements. *Joint Video Experts Team (JVET) of ITU-T SG 16 WP 3 and ISO/IEC JTC 1/SC 29, document JVET-V0056, teleconference,* April 2021